# EUROPEAN PATENT APPLICATION

(11) **EP 3 949 743 A1**
(43) Date of publication of application: **09.02.2022**
(21) Application number: 20778364.8
(22) Date of filing: 26.03.2020
(51) Int. Cl.: A23D 7/00

(54) **PLANT-BASED BUTTER-LIKE COMPOSITION**

(30) Priority: 28.03.2019 JP 2019062882
(71) Applicant: Fuji Oil Holdings Inc., Izumisano-shi, Osaka 598-8540 (JP)
(72) Inventor: SHISHIDO, Yuusuke, Izumisano-shi, Osaka 598-8540 (JP); SANO, Nobuaki, Izumisano-shi, Osaka 598-8540 (JP)
(74) Representative: Boult Wade Tennant LLP
(86) International application number: PCT/JP2020/013559
(87) International publication number: WO 2020/196713

(57) **Abstract**

The purpose of the present invention is to provide a plant-based butter-like composition that exhibits a good melt-in-the-mouth behavior while having a butter-like shape retention property. The plant-based butter-like composition is characterized by being an emulsion comprising a plant milk and a plant oil/fat having a rising melting point of at least 20°C and satisfying the following conditions (a) and (b) : (a) A = 0.7 to 3, and (b) B = 1.2 to 5, where A wt% is the content of plant milk-derived protein and B is the weight ratio of the oil/fat fraction to the total of a nonfat solids fraction and a moisture fraction.

## Description

### Technical Field

The present invention relates to a plant-based composition having butter-like characteristics.

### Background Art

A price of butter, which is made from milk, is high, and tends to be further raised by a recent insufficient supply of butter and dairy raw materials. Meanwhile, a substitute made from water-in-oil emulsion derived from inexpensive plant oil, such as margarine, has been used in the past. However, it is same in the point that dairy raw material has been used for preparing most commercially available margarines. In addition, an emulsifier is commonly used in margarine to stabilize an emulsion. Foods containing an emulsifier tends to be avoided from the recent increasing health consciousness of foods by consumers.

Due to the above situation, there is more demand than ever for a plant-based butter substitute. The relating known technologies are as follows.

For example, Example 3 and Example 7 of Patent Document 1 describe a method for producing a plasticized fat characterized by adding an oil phase which does not contain lecithin to an aqueous phase in which an appropriate amount of hydrophilic emulsifier and soymilk are dissolved or dispersed, emulsifying the mixture, and then further adding an oil phase in which lecithin is dissolved, emulsifying the mixture into an oil-in-water emulsion, and then subjecting the emulsion to a quench-plasticizing. This technology does not specifically require being plant-based, and requires both hydrophilic and lipophilic emulsifiers as emulsifiers.

Patent Document 2 describes a cream-like food which is an oil-in-water emulsion, including, with respect to the total emulsion, 25 to 55% by weight fat, 0.01 to 3.0% by weight emulsifier and 0.01 to 5% by weight protein having heat gelation property such as egg white, where the emulsifier contains 10% by weight or more polyglycerol condensed ricinoleic acid ester with respect to the total emulsifier. This technology uses egg white and lactalbumin as the protein having heat gelation property, and butter as fat in Examples, and thus does not intend to produce a plant-based butter-like composition.

Patent document 3 describes a butter-like composition including a solidified emulsion containing at least one plant oil, water and at least 18% by weight fiber. In the Examples, extra virgin olive oil, which is a liquid oil, is used.

Patent Document 4 describes a spread prepared by mixing a soymilk and sugar such as syrup, and adding and solubilizing a fat to the aqueous solution of the mixture of soymilk and sugar, where a water content of the spread is in the range from 18 to 30% by weight. This technology can be said to provide a plant-based spread. However, this spread may has a certain degree of shape retention, but has a low viscosity at room temperature and is considered to have softer physical properties than butter. It is because a large amount of syrup as sugar is mixed with soymilk and salad oil, which is a liquid oil, is used as the fat in Examples.

Patent Document 5 describes an emulsified fat composition containing a soymilk made from germinated soybean, where a solid content derived from the soymilk made from germinated soybean in the emulsified fat composition is 0.3 to 6.0% by weight. It can be said that this technology discloses emulsified fat composition such as plant-based margarine, but it follows the conventional method of preparing margarine including rapid cooling and solidification while kneading the emulsion, and thus Patent Document 5 discloses compositions similar to margarine, which is a water-in-oil emulsion.

The above references and documents presented herein are hereby incorporated by reference.

### Prior Art Documents

Patent Documents

Patent Document 1: JP H01-39941 A
Patent Document 2: JP H07-16050 A
Patent Document 3: JP 2002-517216 A
Patent Document 4: JP 2012-95581 A
Patent Document 5: JP 2010-213637 A

### Summary of Invention

### Problems to Be Solved by Invention

An object of the present invention is to provide a plant-based butter-like composition which has good meltability in the mouth while having butte-like characteristics such as shape-retaining property.

### Means for Solving Problems

The present inventors have intensively studied. As a result, they have found that a plant-based butter-like composition containing a plant milk and a plant fat, with meeting a specific ratio of a protein content derived from the plant milk to a fat content may solve the above-described problems. The present invention has been completed based on the findings.

That is, the present invention may encompass the following aspects:
(1) a plant-based butter-like composition, where the composition is an emulsion containing a plant milk and a plant fat having 20°C or more of slip melting point, and the composition meets the following conditions (a) and (b):
   (a) A = 0.7 to 3, and
   (b) B = 1.2 to 5,
   where a protein content derived from the plant milk is A% by weight, and a weight ratio of the fat to the total amount of non-fat solids and water is B;
(2) the butter-like composition of (1), which is solid state at 5°C or more and less than 30°C;
(3) the butter-like composition of (1) or (2), which melts at mouth temperature;
(4) the butter-like composition of any one of (1) to (3), where a continuous phase of the emulsion is an aqueous phase;
(5) the butter-like composition of any one of (1) to (4), where the plant milk is soymilk, coconut milk, or almond milk;
(6) a use of the butter-like composition of any one of (1) to (5), for a butter cream substitute;
(7) a use of the butter-like composition of any one of (1) to (5), for a spread;
(8) a method for producing the butter-like composition of any one of (1) to (5), including adding a plant fat having 20°C or more of slip melting point into an aqueous phase containing a plant milk, emulsifying and dispersing the mixture under heating, and then cooling and solidifying the mixture.

### Effect of Invention

The present invention enables to obtain a plant-based butter-like composition which may be substituted for butter application and has good meltability in the mouth while maintaining butter-like characteristics such as shape-retention property. In addition, the present invention enables to reduce an amount of emulsifier used, especially to zero. Further, a production method of the present invention enables to obtain a butter-like composition by a simple cooling method, without using a rapid cooling and solidification device such as combinator or onlator, which are usually used in a production of margarine.

### Mode for Carrying Out Invention

The present invention will be described in detail in the followings.

### (Plant-based butter-like composition)

As used in a context of a plant-based butter-like composition of the present invention (hereinafter sometimes referred to as "the present composition"), the term "butter-like composition" means a composition having properties similar to butter produced from milk. As used herein, "properties similar to butter" refers specifically to properties that are solid state at room temperature and melt in the mouth. As used herein, "room temperature" is usually defined as 5°C or more and less than 30°C, and closer to room temperature as between 10°C and 28°C, preferably between 15°C and 25°C. As used herein, the term "solid state" refers to a state that retains a certain shape and volume. As used herein, the term "property of melting in the mouth" refers to an ability of a solid material to melt at mouth temperature of about 35 to 37°C, and it also be referred to as "meltability in the mouth".

The butter-like composition of the present invention is, more preferably a composition which has a taste similar to butter produced from milk.

As used herein, "plant-based" means that the composition is prepared based on raw materials of plant origin. Specifically, a ratio of animal-derived ingredients in the butter-like composition is preferably less than 50% by weight in terms of solid content, and more preferably 40% by weight or less, 30% by weight or less, 20% by weight or less, 10% by weight or less, 1% by weight or less, 0.5% by weight or less, 0.2% by weight or less, 0.1% by weight or less, 0.05% by weight or less, or 0% by weight.

### (Emulsion)

The present composition is an emulsion containing mainly plant milk and fat in solid state at 20°C. The emulsion form may be oil-in-water, water-in-oil, oil-in-water-in-oil, or water-in-oil-in-water, depending on a ratio of water to fat. In preferred emulsion form, the continuous phase is an aqueous phase. The specific examples include oil-in-water and water-in-oil-in-water emulsions. Whether the continuous phase is aqueous or not may generally be confirmed by a presence or absence of conductivity in the emulsion using a digital multimeter or similar device. Here, the emulsion may be completely uniform and stable, or the emulsion may be partially broken, for example, the oil phase particles may be partially coarsened.

### (Plant milk)

At least, the present composition contains plant milk. The "plant milk" or "plant-based milk" is a milk prepared from plant that contains protein and preferably fat, and may be used in liquid or powder form. A presence of phospholipid such as lecithin in the plant milk is more desirable in terms of stabilizing the emulsification of the above O/W emulsion.

As used herein, the term "milk" is interpreted as "emulsion or dried product thereof" in a broader sense than cow milk. Examples of base plant for the milk include, but are not limited to, seed nut and legume such as soybean, pea, chickpea, mung bean, peanut, coconut, cashew, walnut, pecan nut, macadamia nut, almond, hazelnut, candlenut, Brazil nut, hickory, pistachio, rapeseed, castor bean, cottonseed, linseed, sesame seed, lupinus, safflower, avocado, palm kernel, sunflower and shea nut. The plant milk may be a milk prepared from two or more of the above-described plants. In an aspect, soymilk, coconut milk, or almond milk may be selected as the plant milk.

### OSoymilks

Among plant milks, soymilks include a soymilk and similar products, and include whole soybean flour milk obtained without separating okara, and soymilk cream, in addition to regular soymilk. In particular, soymilk cream contains a large amount of polar lipids such as lecithin derived from the raw material, which may further stabilize an emulsification of the plant-based butter-like composition of the present invention.

### OSoymilk cream

Soymilk cream has higher fat content than soymilk, and may be referred to as "soybean emulsion composition" or "high-fat soymilk". In general, fresh cream is produced by centrifuging cow milk. Similarly, soymilk cream may be obtained by treating soymilk obtained from whole soybean by enzymatic decomposition or mineral addition, as necessary, and then centrifuging the soymilk to recover the cream layer rich in oil with low specific gravity, but the production method thereof is not limited. For example, the method for producing soybean emulsion composition described in JP 2012-16348 A, or the method described in JP 2009-528847 A, WO 2002/26788 A, JP 2002-101820 A, JP H11-56248 A, or JP 2011-147394 A may be used.

A lower limit of fat content of the soymilk cream is preferably 35% by mass or more, more preferably 40% by mass or more, on a dry matter basis. An upper limit thereof is preferably 75% by mass or less, more preferably 70% by mass or less. A protein content of the soymilk cream is preferably 15% by mass or more, more preferably 20% by mass or more, on a dry matter basis. An upper limit thereof is preferably 40% by mass or less, more preferably 35% by mass or less. A ratio of fat content/protein content of the soymilk cream is preferably 1 or more, more preferably 1.2 or more, 1.5 or more, or 1.8 or more.

A more suitable form of the soymilk cream is to be enriched with "lipophilic proteins" among the soybean proteins so as to have a rich taste and a good soybean-derived taste. For example, the soybean emulsion composition described in JP 2012-16348 A may be used as the soybean protein material. An indicator of enrichment of lipophilic protein may be LCI (Lipophilic Proteins Content Index) value described in the above-described publication, and a degree of the enrichment may be estimated by determining the LCI value. In the present invention, it is further preferable to use the soymilk cream with 50% or more, preferably 55% or more LCI value, which is enriched with lipophilic proteins. An example of a commercially available soymilk cream with 55% or more LCI value is "KoCream" (registered trademark) manufactured by Fuji Oil Co., Ltd.

### (Plant fat)

The present composition contains a plant fat having 20°C or more slip melting point. In an aspect, the slip melting point may be 21°C or more, 22°C or more, 23°C or more, 24°C or more, 25°C or more, 26°C or more, 27°C or more, 28°C or more, 29°C or more, or 30°C or more. In another aspect, the slip melting point may be 50°C or less, 45°C or less, 40°C or less, 37°C or less, 36°C or less, 35°C or less, 34°C or less, 33°C or less, or 32°C or less. As used herein, the slip melting point is.

The present composition, which contains the fat, maintains a solid state at least at room temperature of 20°C or less, and as long as it is met, any combination of fats may be used. And the fat may contain plant fat with less than 20°C of slip melting point as a part of the fat.

The fat is not particularly limited as long as plant fat, and examples of the fat include one or two or more of plant fat such as rapeseed oil, soybean oil, sunflower seed oil, cottonseed oil, peanut oil, rice bran oil, corn oil, safflower oil, olive oil, kapok oil, sesame oil, evening primrose oil, palm oil, shea butter, sal fat, cocoa butter, coconut oil, and palm kernel oil. In addition, processed fat such as extremely hydrogenated oil, fractionated oil, or interesterified oil of the above one plant fat or mixture of two or more plant fats may be used. In addition, the fat may be used in a product form of shortening.

In the selection of the above-described fat, the fat preferably has low trans fatty acid content or does not contain trans fatty acid. In this case, instead of using partially hydrogenated oil, unrefined solid fat such as palm oil, coconut oil, and palm kernel oil, or hard fraction of fractionated fat such as palm stearin may be used.

### (Water, and other aqueous raw materials)

In an aspect, the present composition may contain water or an aqueous raw material in addition to a plant milk. Examples of the aqueous raw material include sugar such as syrup, dextrin, water-soluble dietary fiber, salt, fruit juice, seasoning, yeast extract, green tea powder, cocoa powder, and other taste materials; aqueous vitamin, aqueous protein, and other nutritional supplements; aqueous flavor, hydrophilic emulsifier, thickened polysaccharide, and other materials that can be dissolved in water. Although a water content in the present composition is not particularly limited, preferably 20 to 45% by weight, more preferably 25 to 35% by weight is preferable as the total amount including water derived from the plant milk and separately added water or aqueous materials.

The present composition may also contain dairy raw material such as milk or cream. A percentage of the dairy raw material is preferably 10% by weight or less, more preferably 8% by weight or less, 6% by weight or less, 4% by weight or less, 2% by weight or less, 1% by weight or less, 0.5% by weight or less, 0.2% by weight or less, 0.1% by weight or less, 0.05% by weight or less, or 0% by weight, as a solid content.

### (Oily raw materials)

The present composition may contain an oily raw material in addition to a plant fat. Examples of the oily raw material include oily taste agent, oily flavor, chocolate, fat-soluble vitamin, fat-soluble dye, and insoluble fiber.

In addition, the present composition may contain animal fat such as milk fat, beef tallow, lard, fish oil, and whale oil as a part of the mixed oil or processed fat. As a plant-based butter-like composition, a content of the animal fat is preferably 20% by weight or less, more preferably 10% by weight or less, more preferably 5% by weight or less, most preferably 0% by weight, of the total fat.

The plant-based butter-like composition of the present invention may also contain hydrophilic or lipophilic emulsifiers. The percentage of the emulsifier is preferably 2% by weight or less, 1% by weight or less, or 0% by weight (emulsifier-free) in the composition.

### (Composition)

### (a) Protein content from plant milk

A protein content from plant milk in the present composition (which is referred to as "A", the unit is % by weight) is preferably 0.7% by weight or more, 0.8% by weight or more, 1% by weight or more, or 1.2% by weight or more, as a lower limit. An upper limit may be 3.5% by weight or less, 3% by weight or less, 2.5% by weight or less, or 2% by weight or less.

When the A value is too low, an emulsification of the composition may be incomplete due to too high ratio of solid fat, fat in the composition tends to separate easily, and the composition tends to have hard texture like wax and inferior meltability in the mouth. On the other hand, when it is too much, the composition tends to be cream state having fluidity and difficult to be solid at room temperature, due to too much aqueous phase.

### (b) Weight ratio of fat to total non-fat solids and water

As used herein, "non-fat solids" means a content calculated by subtracting fat content from solids contained in the composition. As used herein, "fat content" means total fat content derived from plant milk, plant fat and other oily raw materials.

A weight ratio of fat to total amount of non-fat solids and water in the present composition (which is referred to as "B") is preferably 1.2 or more, 1.5 or more, 1.8 or more, or 2.3 or more as a lower limit. An upper limit may be 5 or less, 4.5 or less, or 4 or less.

In other words, the present composition is an emulsion in which the oil phase is more abundant than the water phase.

When the B value is too low, the composition tends to be cream state having fluidity and difficult to be solid at room temperature, due to too much aqueous phase. On the other hand, when the B value is too high, an emulsification of the composition may be incomplete due to too high ratio of solid fat, and fat in the composition tends to separate easily.

### (Production method)

An aspect of producing the present composition will be described in the followings.

For example, an aqueous phase is prepared by mixing plant milk and, if necessary, water or other aqueous raw materials. Fat component derived from plant, which may be contained in these raw materials, are included in the aqueous phase. Next, an oil phase is prepared by mixing plant fat and, if necessary, other oily raw materials. The plant fat include at least a fat in solid state at 20°C, it may be heated and melted to use. Alternatively, the oil phase may be left in solid state and heated after mixing with the aqueous phase. The mixing may be performed by, for example, adding the oil phase to the aqueous phase, and it is more preferable to add the oil phase to the aqueous phase while stirring the aqueous phase. After the mixing, the mixture is emulsified by homogenizing with a homogenizer or homomixer to obtain an emulsion. If necessary, an aqueous raw material such as fruit juice and syrup may be further mixed with the emulsion, and then homogenized. The obtained emulsion may be cooled to a solid state to obtain the present composition.

### (Usage)

The present composition may be used in the same manner as butter. For example, it may be used as a substitute for buttercream, as a spread for applying to bread, as a kneading material for bread dough, as a roll-in material for pastry such as croissant, and as a solid seasoning for cooking.

### Examples

Hereinafter, the present invention will be described in detail by way of Examples showing Examples and Comparative Examples. In Examples, "%" and "part" are "% by weight" and "part by weight", respectively, unless otherwise stated.

### Example 1

Commercially available soymilk (solid content: 10.5%, protein content: 4.5%, fat content: 3.0%) was used as plant milk.

To 75 g this soymilk (liquid temperature: 40°C), 0.6 g rock salt was added to prepare an aqueous phase. While stirring the aqueous phase with a hand mixer, 225 g coconut oil with a slip melting point of about 25°C was heated to 40°C and melted, and this was gradually added to prepare an emulsion.

The obtained emulsion was cooled overnight in a refrigerator at 4°C to obtain a solid composition.

A protein content derived from plant milk in the composition (A value) was 1.13%, total non-fat solids and water derived from plant milk were 24.25%, fat content derived from plant oil and plant milk was 75.75%, and B value was 3.12.

A quality of the composition was evaluated to determine whether it was a butter-like composition or not, using the following (a) and (b) as evaluation items.

### (Quality evaluation item)

(a) Whether the composition is visually solid state after 1 hour in an atmosphere at room temperature (20°C).
(b) Whether the composition is melted like butter by the body temperature and can be recognized as having a butter-like texture, when the composition cooled in refrigerator is placed in the mouth.
(c) Conductivity.

### (Evaluation method)

Three panelists skilled in evaluating a quality of butter and margarine were asked to evaluate items (a) and (b) on a five-point scale, with "1" being the most defective and "5" being the most favorable, by consensus. The butter-like composition was evaluated to be acceptable if it scored at least 3 points in each items.

For item (c), a conductivity of the emulsion was determined with using a digital multimeter (manufactured by Mothertool Co., Ltd.).

As a result of the quality evaluation, evaluation of item (a) was "4" and item (b) was "4," indicating a good butter-like composition.

### Comparative Example 1

Instead of coconut oil, rapeseed oil with a slip melting point of less than 10°C was used, and the emulsion was prepared in the same manner as in Example 1, and cooled overnight in a refrigerator at 4°C. However, the composition did not become a solid state.

### Test Example

In addition to the soymilk used in Example 1, various commercially available plant milks shown in Table 1 and cow milk, which was for reference, were used. The mixing ratio of plant milk as the aqueous phase and coconut oil as the oil phase was changed in various ways, and the total amount of oil phase and aqueous phase was adjusted to 300 g, which is the same as in Example 1, to obtain compositions. The compositions of the each obtained compositions and their quality evaluation results are shown in Table 2. The amount of the added rock salt is very small and negligible in the amount of aqueous phase.

**(Table 1) Various plant milks**

| | Solid content (%) | Protein content (%) | Fat content (%) | Fat/Protein |
|---|---|---|---|---|
| Soymilk | 10.5 | 4.5 | 3.0 | 0.67 |
| Soymilk cream | 20.0 | 5.5 | 12.1 | 2.2 |
| Almond milk | 9.5 | 3.0 | 5.4 | 1.8 |
| Coconut milk | 11.2 | 1.9 | 16.0 | 8.4 |
| Cow milk | 12.6 | 3.4 | 3.9 | 1.2 |

| | | | | |
|---|---|---|---|---|
| * Soymilk cream: "KoCream" manufactured by Fuji Oil Co., Ltd. Almond milk: manufactured by Tsukuba Dairy Products Co., Ltd. Coconut milk: manufactured by Allied Corporation Co., Ltd. | | | | |

**(Table 2) Soymilk**

| Test group | S-1 | S-2 | S-3 | S-4 | S-5 |
|---|---|---|---|---|---|
| Oil phase/aqueous phase ratio | 1.0 | 2.0 | 3.0 | 4.0 | 5.0 |
| Fat content (%) (including plant milk origin) | 51.5 | 67.7 | 75.8 | 80.6 | 83.8 |
| Non-fat solids and water (%) (excluding fat derived from plant milk) | 48.5 | 32.3 | 24.3 | 19.4 | 16.2 |
| Protein content derived from plant milk (%) (A value) | 2.25 | 1.50 | 1.13 | 0.90 | 0.75 |
| Fat content/(non-fat solids and water) ratio (B value) | 1.06 | 2.09 | 3.12 | 4.15 | 5.19 |
| Evaluation item (a) (solid at room temperature) | 1 Liquid | 4 | 5 | 5 | 2 Oil separation |
| Evaluation item (b) (texture) | 1 | 3 A little soft | 4 A little waxy | 3 Waxy | 1 |
| Evaluation of butter-like state | Not acceptable | Acceptable | Acceptable | Acceptable | Not acceptable |
| Conductivity | Yes | Yes | Yes | Yes | No |

Test groups S-2 to S-4 were good as butter-like compositions. However, test group S-1 did not become a solid state, and test group S-5 showed poor emulsification due to increased separation of oil.

**(Table 3) Soymilk cream**

| Test group | C-1 | C-2 | C-3 | C-4 | C-5 | C-6 |
|---|---|---|---|---|---|---|
| Oil phase/aqueous phase ratio | 0.5 | 1.0 | 2.0 | 3.0 | 4.0 | 5.0 |
| Fat content (%) (including plant milk origin) | 41.4 | 56.1 | 70.7 | 78.0 | 82.4 | 85.4 |
| Non-fat solids and water (%) (excluding fat derived from plant milk) | 58.6 | 44.0 | 29.3 | 22.0 | 17.6 | 14.7 |
| Protein content derived from plant milk (%) (A value) | 3.67 | 2.75 | 1.83 | 1.38 | 1.10 | 0.92 |
| Fat content/(non-fat solids and water) ratio (B value) | 0.71 | 1.28 | 2.41 | 3.55 | 4.69 | 5.83 |
| Evaluation item (a) (solid at room temperature) | 1 Liquid | 5 | 5 | 5 | 5 | 2 Oil separation |
| Evaluation item (b) (texture) | 1 | 4 A little soft | 5 Butter-like texture | 5 Butter-like texture | 4 A little waxy | 1 |
| Evaluation of butter-like state | Not acceptable | Acceptable | Acceptable | Acceptable | Acceptable | Not acceptable |
| Conductivity | Yes | Yes | Yes | Yes | Yes | No |

Test groups C-2 to C-5 were good as butter-like compositions. However, test group C-1 did not become a solid state, and test group C-6 showed poor emulsification due to increased separation of oil. The compositions had better quality as a butter-like composition than the compositions prepared from soymilk, in the overall trend.

**(Table 4) Almond milk**

| Test group | A-1 | A-2 | A-3 |
|---|---|---|---|
| Oil phase/aqueous phase ratio | 1.0 | 3.0 | 5.0 |
| Fat content (%) (including plant milk origin) | 52.7 | 76.4 | 84.2 |
| Non-fat solids and water (%) (excluding fat derived from plant milk) | 47.3 | 23.7 | 15.8 |
| Protein content derived from plant milk (%) (A value) | 1.50 | 0.75 | 0.50 |
| Fat content/(non-fat solids and water) ratio (B value) | 1.11 | 3.23 | 5.34 |
| Evaluation item (a) (solid at room temperature) | 1 Liquid | 4 A little oil separation | 2 Oil separation |
| Evaluation item (b) (texture) | 2 | 3 A little waxy | 1 |
| Evaluation of butter-like state | Not acceptable | Acceptable | Not acceptable |
| Conductivity | Yes | Yes | No |

Test group A-2 was good as a butter-like composition. However, test group A-1 did not become a solid state, and test group A-5 showed poor emulsification due to increased separation of oil. The compositions had a quality as a butter-like composition similar as the compositions prepared from soymilk, in the overall trend.

**(Table 5) Coconut milk**

| Test group | N-1 | N-2 | N-3 |
|---|---|---|---|
| Oil phase/aqueous phase ratio | 1.0 | 3.0 | 5.0 |
| Fat content (%) (including plant milk origin) | 58.0 | 79.0 | 86.0 |
| Non-fat solids and water (%) (excluding fat derived from plant milk) | 42.0 | 21.0 | 14.0 |
| Protein content derived from plant milk (%) (A value) | 0.95 | 0.48 | 0.32 |
| Fat content/(non-fat solids and water) ratio (B value) | 1.38 | 3.76 | 6.14 |
| Evaluation item (a) (solid at room temperature) | 3 A little soft | 2 Oil separation | 2 Oil separation |
| Evaluation item (b) (texture) | 4 | 1 | 1 |
| Evaluation of butter-like state | Acceptable | Not acceptable | Not acceptable |
| Conductivity | Yes | Yes | No |

Test group N-1 was good as a butter-like composition. However, test groups N-2 and N-3 showed poor emulsification due to increased separation of oil. The compositions prepared from soymilk had better quality than the compositions, in the overall trend.

**(Table 6) Cow milk**

| Test group | M-1 | M-2 | M-3 |
|---|---|---|---|
| Oil phase/aqueous phase ratio | 1.0 | 3.0 | 5.0 |
| Fat content (%) (including plant milk origin) | 52.0 | 76.0 | 84.0 |
| Non-fat solids and water (%) (excluding fat derived from plant milk) | 48.1 | 24.0 | 16.0 |
| Protein content derived from plant milk (%) (A value) | 1.70 | 0.85 | 0.57 |
| Fat content/(non-fat solids and water) ratio (B value) | 1.08 | 3.16 | 5.24 |
| Evaluation item (a) (solid at room temperature) | 1 Liquid | 2 Oil separation | 2 Oil separation |
| Evaluation item (b) (texture) | 1 | 1 | 1 |
| Evaluation of butter-like state | Not acceptable | Not acceptable | Not acceptable |
| Conductivity | Yes | Yes | No |

Test groups M-1 to M-3 were all poor as butter-like compositions. Although the mixing ratio was changed, the composition having the same butter-like quality as the compositions prepared from soymilk or soymilk cream was not obtained. Fresh cream (oil content: 35%) was used instead of milk, but the results were the same.

From the results in Table 1 to Table 6, the compositions evaluated as butter-like were all conductive. Therefore, the emulsion morphology indicated that the continuous phase was the aqueous phase and not at least a water-in-oil emulsion such as margarine or butter, or an oil-in-water-in-oil emulsion.

In the Test Example, coconut oil with a slip melting point of about 25°C was used as a fat, but a harder butter-like composition may be obtained by using a fat with a higher melting point as appropriate, depending on the desired quality.

### Example 2 (Application Example)

A butter-like composition with fruit puree was prepared according to the formula in Table 7.

Soymilk (solid content: 10.5%, protein content: 4.5%, fat content: 3.0%) used in the Test Example was used as a plant milk. While stirring 75 g this soymilk (liquid temperature 40°C) with a hand mixer, 225 g shortening with a slip melting point of about 36°C was heated to 40°C to melt, and gradually added to prepare an emulsion. Powdered sugar and passion fruit puree were added to the emulsion, which was stirred and dissolved with a hand mixer, and cooled in a refrigerator at 4°C overnight to obtain a solid composition.

The obtained solid composition had A value of 0.86% and B value of 1.38.

In the obtained solid composition, as a result of the quality evaluation, the evaluation of item (a) was "3", it was a little soft, and item (b) was "4". The quality of the composition was acceptable as a butter-like composition. It also had conductivity.

**(Table 7)**

| Raw materials | Formulation ratio (%) |
|---|---|
| Soymilk | 19.1 |
| Powdered sugar | 8.4 |
| Shortening* | 57.4 |
| Passion fruit puree | 15.1 |
| Total | 100 |

| | |
|---|---|
| * "Pampas LBH" manufactured by Fuji Oil Co., Ltd. | |

The obtained butter-like composition was placed in a bowl, heated in a hot water bath, and adjusted to a viscosity which was easily applied with a spatula, then applied to a roll cake dough and rolled up to obtain a roll cake. In this way, it could be used as a substitute for butter cream.

## Claims

1. A plant-based butter-like composition, wherein the composition is an emulsion comprising a plant milk and a plant fat having 20°C or more of slip melting point, and the composition meets the following conditions (a) and (b):
(a) A = 0.7 to 3, and
(b) B = 1.2 to 5,
wherein a protein content derived from the plant milk is A% by weight, and a weight ratio of the fat to the total amount of non-fat solids and water is B.

2. The butter-like composition according to claim 1, which is solid state at 5°C or more and less than 30°C.

3. The butter-like composition according to claim 2, which melts at mouth temperature.

4. The butter-like composition according to claim 3, wherein a continuous phase of the emulsion is an aqueous phase.

5. The butter-like composition according to claim 1, wherein the plant milk is soymilk, coconut milk, or almond milk.

6. The butter-like composition according to claim 3, wherein the plant milk is soymilk, coconut milk, or almond milk.

7. The butter-like composition according to claim 4, wherein the plant milk is soymilk, coconut milk, or almond milk.

8. A use of the butter-like composition according to claim 1, for a butter cream substitute.

9. A use of the butter-like composition according to claim 1, for a spread.

10. A method for producing the butter-like composition according to claim 1, comprising adding a plant fat having 20°C or more of slip melting point into an aqueous phase comprising a plant milk, emulsifying and dispersing the mixture under heating, and then cooling and solidifying the mixture.
